Europäisches Patentamt

European Patent Office

Office européen des brevets

(11) Veröffentlichungsnummer: **0 205 043**

**A2**

(12) **EUROPÄISCHE PATENTANMELDUNG**

(21) Anmeldenummer: **86107289.0**

(51) Int. Cl.⁴: **G01N 27/06**

(22) Anmeldetag: **28.05.86**

(30) Priorität: **14.06.85 DE 3521438**

(43) Veröffentlichungstag der Anmeldung:
**17.12.86 Patentblatt 86/51**

(84) Benannte Vertragsstaaten:
**AT CH DE FR LI**

(71) Anmelder: **KRAFTWERK UNION
AKTIENGESELLSCHAFT
Wiesenstrasse 35
D-4330 Mülheim (Ruhr)(DE)**

(72) Erfinder: **Schott, Manfred
Wehneltstrasse 3
D-8520 Erlangen(DE)**

(74) Vertreter: **Mehl, Ernst, Dipl.-Ing. et al
Postfach 22 01 76
D-8000 München 22(DE)**

(54) Verfahren und Einrichtung zur Ammoniakmessung in einem Gasgemisch.

(57) Die Erfindung betrifft ein Verfahren zum Messen einer Ammoniakmenge in einem Gas, in dem Ammoniak der einzige kationenbildende Bestandteil ist. Dabei wird das Gas mit Wasser vermischt und die Mischung anschließend in einem Phasentrenner (2) in eine gasförmige und in eine flüssige Phase getrennt. Es ist vorgesehen, daß aus der flüssigen Phase, in der die einzigen Kationen Ammoniumkationen sind, durch einen Anionentauscher (9) alle Anionen entfernt werden. Danach wird die Leitfähigkeit der flüssigen Phase mit einem Leitfähigkeitsmesser -(10) bestimmt. In einer Auswerteeinheit (11), die elektrisch mit dem Leitfähigkeitsmesser (10) verbunden ist, wird aus der gemessenen Leitfähigkeit die Ammoniakmenge bestimmt. Die Auswerteeinheit -(11) ist mit einer Anzeigeeinheit (12) verbunden.

## Verfahren und Einrichtung zur Ammoniakmessung in einem Gasgemisch

Die Erfindung betrifft ein Verfahren zum Messen einer Ammoniakmenge in einem Gas, in dem Ammoniak der einzige Kationen bildende Bestandteil ist, wobei das Gas mit Wasser vermischt und die Mischung anschließend in eine gasförmige und in eine flüssige Phase getrennt wird.

Gase mit einem Ammoniakanteil werden in unterschiedlichen technischen Bereichen eingesetzt oder entstehen beim Ablauf technischer Prozesse. Beispielsweise wird zur Reinigung von Rauchgasen fossil befeuerter Kraftwerke Ammoniak zur Entfernung von Stickoxiden zugemischt. Dabei ist stets ein kleiner Überschuß an Ammoniak vorhanden.

Verfahren zur Überwachung dieses Überschusses wie auch der zu dosierenden Ammoniakmenge sind bekannt. Dabei wird der filtrierte Rauchgasstrom zum Beispiel mit Wasser vermischt und anschließend die als flüssige Phase entstandene Lösung chemisch analysiert. Eine solche quantitative Bestimmung des in der Lösung dissoziierten Ammoniaks ist nur im Labor von Hand durchführbar. Das bekannte chemische Verfahren erfordert ständig Bedienungspersonal. Darüber hinaus nimmt jede Messung einen relativ langen Zeitraum in Anspruch. Es sind also nur sporadische Ammoniakmessungen wirtschaftlich vertretbar.

Der Erfindung liegt die Aufgabe zugrunde, ein automatisierbares Verfahren zur Ammoniakmessung zu entwickeln, das eine kontinuierliche Überwachung der Ammoniakkonzentration zuläßt. Darüber hinaus soll eine schnell und zuverlässig arbeitende Einrichtung zur kontinuierlichen Ammoniakmessung entwickelt werden, die im Betrieb ohne Bedienungspersonal auskommt.

Die Aufgabe wird erfindungsgemäß dadurch gelöst, daß aus der flüssigen Phase, in der das einzige Kation Ammonium ist, alle Anionen entfernt werden und danach die Leitfähigkeit der flüssigen Phase gemessen wird und daß aus der gemessenen Leitfähigkeit die Ammoniakmenge im Gas bestimmt wird.

In der flüssigen Phase sind verschiedene Anionen, aber nur das Ammoniumkation vorhanden. Nach dem Entfernen aller Anionen trägt also allein das Ammoniumkation zur Leitfähigkeit der Flüssigkeit bei. Daher ist die meßbare Leitfähigkeit proportional zur Ammoniumkonzentration. Diese ist aber von der Ammoniakkonzentration im Rauchgas abhängig. Falls das Verhältnis der Volumenströme von Rauchgas und zugemischtem Wasser konstant gehalten wird, ist sogar eine Proportionalität zwischen gemessener Leitfähigkeit und Ammoniakkonzentration im Gas gegeben.

Mit dem erfindungsgemäßen Verfahren wird der Vorteil erzielt, daß durch eine einfache Leitfähigkeitsmessung die Ammoniakkonzentration eines Gases kontinuierlich überwacht wird. Dazu ist weder eine aufwendige Laboreinrichtung noch ein hoher Personaleinsatz notwendig.

Beispielsweise wird das erfindungsgemäße Verfahren eingesetzt, um den Ammoniakanteil im Rauchgas eines fossil betriebenen Kraftwerkes zu messen. In einem filtrierten Rauchgasstrom ist nämlich das Ammoniumkation das einzige Kation in einem Gemisch aus anionischen und elektrisch neutralen Gasen. Durch die Überwachung des Rauchgases wird der Vorteil erzielt, daß der Ammoniaküberschuß bei einer katalytischen Reduktion von Stickoxiden leicht überwachbar ist.

Eine Einrichtung zur Durchführung des erfindungsgemäßen Verfahrens weist eine Gasleitung und eine Wasserleitung auf, die beide mit einer Mischungsleitung verbunden sind, so daß eine innige Vermischung gegeben ist. Ein Phasentrenner hat einen Zuführungsanschluß für das Gas-Wassergemisch, sowie Ableitungsanschlüsse für die gasförmige und für die flüssige Phase der Mischung. Es ist vorgesehen, daß mit dem Ableitungsanschluß des Phasentrenners für die flüssige Phase ein Eingangsrohr eines Anionentauschers verbunden ist. Das Ausgangsrohr dieses Anionentauschers enthält einen Leitfähigkeitsmesser, der über eine elektrische Leitung mit einer Auswerte-und Anzeigeeinheit verbunden ist.

In der Einrichtung wird das zu untersuchende Gas mit Wasser gemischt. Die Zufuhr von Wasser wird dabei dem Gasstrom angepaßt, wozu ein Niveaumesser im Phasentrenner mit einer Pumpe in der Wasserzuleitung in Verbindung steht. Da Ammoniak in Wasser löslich ist, befindet sich der Ammoniakanteil des Gases als Ammoniumkationen in der flüssigen Phase, die den Phasentrenner verläßt. Diese Ammoniumkationen sind die einzigen Kationen in der flüssigen Phase, da im zu untersuchenden Gas, beispielsweise im Rauchgas eines fossil betriebenen Kraftwerkes, Ammoniak der einzige Kationen bildende gasförmige Bestandteil ist. In der erfindungsgemäßen Einrichtung werden durch den Anionentauscher aus der flüssigen Phase alle Anionen entfernt. Dadurch verbleiben als einzige elektrisch leitende Bestandteile im Ausgangsrohr des Anionentauschers die Ammoniumkationen. Die durch den Leitfähigkeitsmesser bestimmte elektrische Leitfähigkeit der Flüssigkeit ist also ausschließlich auf diese Kationen zurückzuführen. In der Auswerteeinheit wird daher aus der gemessenen Leitfähigkeit die Ammoniumkonzentration in der Flüssigkeit und damit auch die Ammoniakkonzentration im Gas bestimmt, das der erfindungsgemäßen Einrichtung zugeführt wird.

Mit der Einrichtung wird der Vorteil erzielt, daß eine einfach und kontinuierlich durchführbare Leitfähigkeitsmessung einer Flüssigkeit ausreicht, um eine Ammoniakkonzentration in einem Gas zu bestimmen. Eine mit der Auswerteeinheit verbundene Anzeigeeinheit ist beispielsweise ein Schreiber, der die Ammoniakkonzentration kontinuierlich protokolliert.

Der Ausgang des Leitfähigkeitsmessers ist mit einer Auffangvorrichtung oder aber mit der Mischungsleitung verbunden, wodurch ein geschlossener Wasserkreislauf gegeben ist. Damit wird vorteilhaft auf die Einspeisung von Wasser sowie eine Regulierung der Wassermenge verzichtet. Im Phasentrenner stellt sich dabei ein Gleichgewicht der Ammoniumkonzentration ein, die Rückschlüsse auf die zugeführte Ammoniakmenge im zugeführten Gas zuläßt.

Mit der Erfindung wird insbesondere der Vorteil erzielt, daß mit einem automatisch arbeitenden Meßgerät die Ammoniakkonzentration ständig überwacht wird.

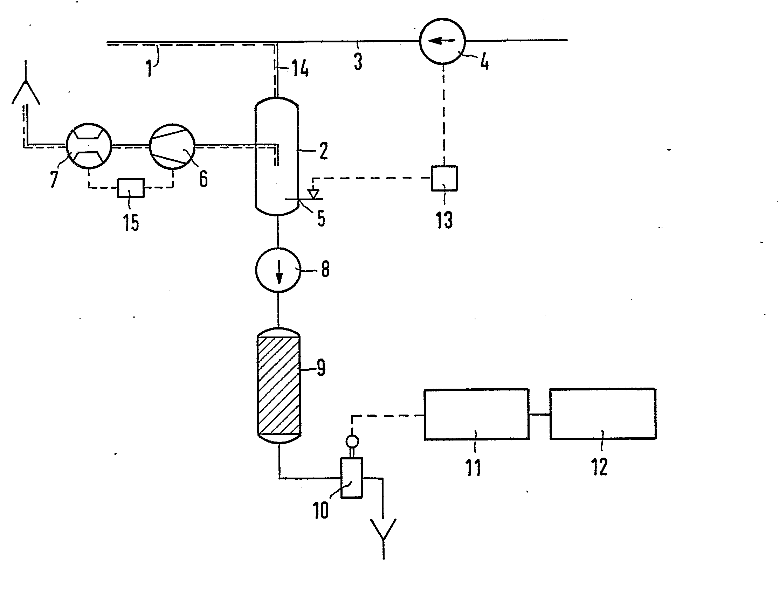

Die Erfindung wird nun anhand der Zeichnung näher erläutert:

Die Zeichnung zeigt eine erfindungsgemäße Einrichtung zur Ammoniakmessung.

Dem Meßgerät wird ein Gas, beispielsweise ein filtriertes Rauchgas eines fossil betriebenen Kraftwerkes durch ein erstes Rohr 1 zugeführt . In diesem Gas ist Ammoniak der einzige Kationen bildende Bestandteil, dessen Konzentration bestimmt werden soll. Das Rohr 1 ist mit einer Wasserzuleitung 3 verbunden, wobei eine Mischungsleitung 14 mit einem Zuführungsanschluß eines Phasentrenners 2 in Verbindung steht. Eine Pumpe 4 in der Wasserzuleitung 3 steht mit einem Niveausensor 5 im Phasentrenner 2 über ein Steuerglied 13 in Verbindung, wodurch das Flüssigkeitsniveau im Phasentrenner 2 konstant gehalten wird.

Im Phasentrenner 2 wird die Mischung aus Rauchgas und Wasser in eine gasförmige und in eine flüssige Phase getrennt. Da Ammoniak gut wasserlöslich ist, wird er im Phasentrenner 2 in der flüssigen Phase als Ammoniumkationen gebunden. Die gasförmige Phase wird durch eine Pumpe 6, die über ein Steuerglied 15 mit einer Meßeinrichtung 7 in Verbindung steht, aus dem Phasentrenner 2 entfernt. Dabei wird sichergestellt, daß die geförderte Gasmenge konstant ist. Mit dem Ableitungsanschluß des Phasentrenners 2 für die flüssige Phase steht über eine Pumpe 8 mit konstanter Förderleistung der Eingang eines Anionentauschers 9 in Verbindung. Dort werden sämtliche Anionen aus der flüssigen Phase entfernt, so daß das einzige Kation, das Ammoniumkation, der einzige noch verbleibende leitende Bestandteil der Flüssigkeit ist. Das Ausgangsrohr des Anionentauschers 9 enthält einen Leitfähigkeitsmesser 10, der elektrisch mit einer Auswerteeinheit 11 in Verbindung steht. Diese ist mit einer Anzeigeeinheit 12 verbunden, die ein Drucker sein kann.

Die Leitfähigkeit der Flüssigkeit, die den Anionentauscher 9 verläßt, ist ausschließlich auf Ammoniumkationen zurückzuführen. Daher wird in der Auswerteeinheit 11 aus der gemessenen Leitfähigkeit die Konzentration der Ammoniumkationen bestimmt. Die gleiche Kationenkonzentration ist auch schon in der flüssigen Phase vorhanden, die vom Phasentrenner 2 abgegeben wird. Da Ammoniakgas im Phasentrenner in Ammoniumkationen umgewandelt wird, läßt sich von der Kationenkonzentration auf die Ammoniakgaskonzentration im Zuführungsrohr 1 schließen. Die Auswerteeinheit 11 bestimmt also aus den Meßwerten des Leitfähigkeitsmessers 10 die Ammoniakkonzentrationen im Zuführungsrohr 1. Die Leitfähigkeitsmessungen können kontinuierlich erfolgen. Folglich ist mit der erfindungsgemäßen Einrichtung auch eine kontinuierliche Überwachung der Ammoniakkonzentration durchführbar. Die Anzeigeeinheit 12 druckt beispielsweise kontinuierlich eine Liste der Konzentrationswerte aus. Es kann aber auch durch die Anzeigeeinheit 12 der Konzentrationsverlauf aufgezeichnet werden. Darüber hinaus kann ein Ausgangssignal der Auswerteeinheit 11 eine Signaleinrichtung oder eine Steuereinrichtung einschalten.

Falls das Ausgangsrohr des Anionentauschers 9 nach dem Leitfähigkeitsmesser 10 über eine Rückführleitung mit der Mischungsleitung 14 verbunden ist, kommt man ohne Wasserzuleitung 3 aus. Der geschlossene Wasserkreislauf sichert eine ausreichende Wassermenge im Phasentrenner 2, die noch dadurch ergänzt wird, daß das zugeführte Gas Wasser enthalten kann. Hiermit wird der Vorteil erzielt, daß man ohne Niveausensor 5 und nachgeschaltetes Steuerglied 13 auskommt. Durch eine Überlaufvorrichtung am Phasentrenner 2 wird ein zu hoher Flüssigkeitsstand im Phasentrenner 2 verhindert.

Liste der Bezugszeichen

1 Zuleitungsrohr für Gas
2 Phasentrenner
3 Wasserzuleitung
4 Pumpe
5 Niveausensor
6 Pumpe

7 Meßeinrichtung
8 Pumpe
9 Anionentauscher
10 Leitfähigkeitsmesser
11 Auswerteeinheit
12 Anzeigeeinheit
13 Steuerglied
14 Mischungsleitung
15 Steuerglied

**Ansprüche**

1. Verfahren zum Messen einer Ammoniakmenge in einem Gas, in dem Ammoniak der einzige Kationen bildende Bestandteil ist, wobei das Gas mit Wasser vermischt und die Mischung anschließend in eine gasförmige und in eine flüssige Phase getrennt wird,

**dadurch gekennzeichnet ,**

daß aus der flüssigen Phase, in der die einzigen Kationen Ammoniumkationen sind, alle Anionen entfernt werden und danach die Leitfähigkeit der flüssigen Phase gemessen wird und daß aus der gemessenen Leitfähigkeit die Ammoniakmenge im Gas bestimmt wird.

2. Verfahren nach Anspruch 1,

**dadurch gekennzeichnet ,**

daß das Gas Rauchgas eines fossil betriebenen Kraftwerkes ist.

3. Einrichtung zur Durchführung des Verfahrens nach Anspruch 1, mit einem Phasentrenner (2), der einen mit einer Mischungsleitung (14) verbundenen Zuführungsanschluß für das Gas-Wasser-Gemisch hat, sowie Ableitungsanschlüsse für die gasförmige und für die flüssige Phase der Mischung,

**dadurch gekennzeichnet ,**

daß mit dem Ableitungsanschluß des Phasentrenners (2) für die flüssige Phase ein Eingangsrohr eines Anionentauschers (9) verbunden ist, daß ein Ausgangsrohr des Anionentauschers (9) einen Leitfähigkeitsmesser (10) enthält und daß der Leitfähigkeitsmesser (10) elektrisch mit einer Auswerteeinheit (11) und einer Anzeigeeinheit (12) verbunden ist.

4. Einrichtung nach Anspruch 3,

**dadurch gekennzeichnet ,**

daß die Anzeigeeinheit (12) ein Drucker ist.

5. Einrichtung nach Anspruch 3,

**dadurch gekennzeichnet ,**

daß das Ausgangsrohr des Anionentauschers (9) nach dem Leitfähigkeitsmesser (10) über eine Rückführleitung mit der Mischungsleitung (14) verbunden ist, wodurch ein geschlossener Wasserkreislauf vorhanden ist.